Europäisches Patentamt

European Patent Office

Office européen des brevets

(11) Veröffentlichungsnummer: **0 473 873 A1**

# EUROPÄISCHE PATENTANMELDUNG

(21) Anmeldenummer: **91105634.9**

(22) Anmeldetag: **10.04.91**

(51) Int. Cl.5: **H04B 10/14**, G02B 6/42

(30) Priorität: **30.08.90 CH 2822/90**

(43) Veröffentlichungstag der Anmeldung:
**11.03.92 Patentblatt 92/11**

(84) Benannte Vertragsstaaten:
**AT CH DE FR GB IT LI NL SE**

(71) Anmelder: **Landis & Gyr Betriebs AG**

**CH-6301 Zug(CH)**

(72) Erfinder: **Hälg, Beat**
**Allmendweg 7**
**CH-6330 Cham(CH)**

(54) Vorrichtung zum Empfang wellenlängen-modulierter Lichtsignale.

(57) Eine Vorrichtung (8) zum Empfang von wellenlängen-modulierten Lichtsignalen in einem Signalstrahl (7) weist einen Detektor (11) und eine Verstärkereinheit (12) auf. Der Detektor (11) umfasst wenigstens zwei Photosensoren (16; 17) mit Filtern (18; 19) und einen Referenzsensor (15) zum Empfang des Signalstrahls (7). Die Filter (18; 19) sind als Fabry-Perot-Resonatoren (1) mit verschiedenen, vorbestimmten optischen Längen ($L_1$; $L_2$) ausgebildet. Ein Referenzteiler (25 bzw. 26) in der Verstärkereinheit (12) bildet ein Ausgangssignal (A1 bzw. A2), wobei die Intensität ($I_1$ bzw. $I_2$) des Photostroms aus einem der Photosensoren (16 bzw. 17) ins Verhältnis zu einer Referenzintensität ($I_0$) des Photostroms aus dem Referenzsensor (15) gesetzt wird.

## Fig.2

Die Erfindung bezieht sich auf eine Vorrichtung zum Empfang wellenlängen-modulierter Lichtsignale der im Oberbegriff des Anspruchs 1 genannten Art.

Solche Vorrichtungen eignen sich beispielsweise zum Gewinnen von Informationen, die mit wellenlängen-modulierten Lichtsignalen übertragen werden.

Ein mit seiner vorbestimmten optischen Länge charakterisierter Fabry-Perot-Resonator filtert z. B. aus einfallendem Licht mit einer vorbestimmten mittleren Wellenlänge eine oder mehrere fast monochromatische Strahlen mit vorbestimmten Wellenlängen aus. Aendert sich die optische Länge, z. B. unter der Wirkung einer physikalischen Grösse, wirkt der Resonator als Signalgeber für eine Messgrösse, da die in Transmission den Signalgeber verlassenden Strahlen eine der physikalischen Grösse proportionale Modulation der Wellenlängen aufweisen. Ein optisches Spektrometer dient als Empfangsvorrichtung für dieses wellenlängen-modulierte Licht, wie z. B. in "Fibre Optic Colour Sensors Based on Fabry-Perot Interferometry" by E. R. Cox et al. in First International Conference on Optical Sensors, 26 - 28 April 1983, IEE, London UK) oder in EP 013 974 A1 beschrieben ist.

Eine einfache Empfangsvorrichtung besteht z. B. aus einer Photodiode mit einem vorgeschalteten Farbfilter, wobei nur schwach modulierte Lichtsignale eindeutig erfassbar sind, die einen Modulationsgrad von weniger als einem Viertel der mittleren Wellenlänge aufweisen.

Die EP 172 623 A2 beschreibt ein von Intensitätsschwankungen einer Lichtquelle fast unabhängige Empfangsvorrichtung mit zwei über einen Strahlteiler ("beam splitter") gleichmässig beleuchteten Photosensoren mit vorgeschalteten Kantenfiltern. Das eine Filter ist als Tiefpass und das andere als Hochpass mit gleicher Kantenwellenlänge ausgebildet, wobei jede Aenderung der Wellenlänge eine Verlagerung der Intensität von dem einen Photosensor zum andern bewirkt. Der Modulationsgrad darf die halbe mittlere Wellenlänge der Lichtquelle nicht überschreiten.

Bei einer in der DE-OS 38 16 529 A1 beschriebenen Messvorrichtung erzeugt ein Signalgeber wellanlängen-modulierte Lichtsignale in Reflexion, das in einer Empfangsvorrichtung durch ein als Fabry-Perot-Resonator ausgebildetes, elektrisch abstimmbares Filter hindurch auf einen einzigen Photosensor auftrifft. Aus einem Abstimmsignal des Filters und einem Sensorsignal des Photosensors ist die Messgrösse auch bei starker Modulation der Lichtsignale bestimmbar.

Der Erfindung liegt die Aufgabe zugrunde, eine einfache, kostengünstige Vorrichtung zum Empfang wellenlängen-modulierter Lichtsignale zu schaffen, die eine starke Modulation aufweisen und deren Intensität schwankt.

Die genannte Aufgabe wird erfindungsgemäss durch die Merkmale des Anspruchs 1 gelöst.

Nachfolgend werden Ausführungsbeispiele der Erfindung anhand der Zeichnungen näher erläutert.

Es zeigt:

Figur 1      einen Fabry-Perot-Resonator,

Figur 2      eine Vorrichtung zum Empfang wellenlängenmodulierter Lichtsignale,

Figur 3      eine periodische Funktion P(x),

Figur 4      Intensitäten $I_0$, $I_1$, $I_2$ von Photoströmen aus Sensoren,

Figur 5      Funktionen der Quotienten $I_1/I_0$ und $I_2/I_0$,

Figur 6      eine Ortsfunktion von Ausgangssignalen A1 und A2,

Figur 7      einen Photosensor,

Figur 8      die Vorrichtung auf einem Halbleitersubstrat,

Figur 9      ein Spektralfilter zu einem Detektor,

Figur 10      eine Ankopplung der Vorrichtung an einen Lichtleiter und

Figur 11      eine Anordnung von Sensoren.

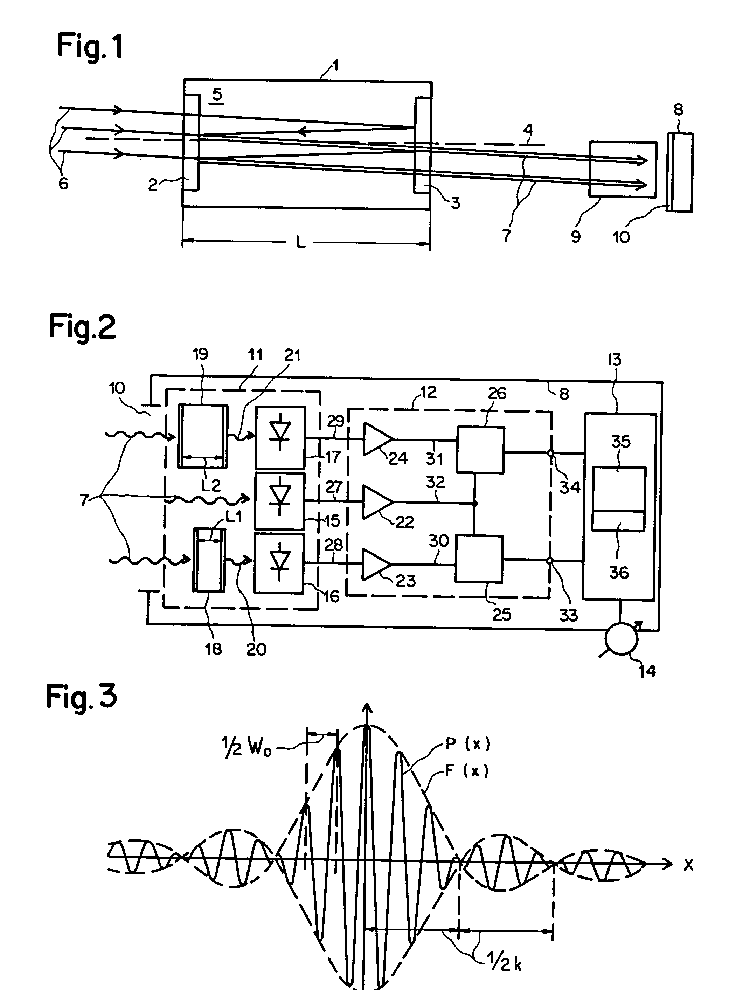

In der Figur 1 bedeutet 1 einen optischen Resonator nach Fabry-Perot, 2 und 3 teildurchlässige Spiegel, die einander zugewendet in einem vorbestimmten geometrischen Abstand auf einer optischen Achse 4 angeordnet sind und den optischen Resonator 1 bilden. Die optische Länge L des Resonators 1 hängt von einem Medium 5, das den Raum zwischen den beiden Spiegeln 2, 3 erfüllt, und vom geometrischen Abstand zwischen den beiden spiegeln 2, 3 ab.

Eine hier nicht gezeigte Lichtquelle erzeugt einen einfallenden Strahl 6, dessen Licht vorzugsweise ein weisses Spektrum oder wenigstens einen breiten Ausschnitt aus dem weissen Spektrum aufweist und eine mittlere Wellenlänge $W_0$ besitzt. Der Strahl 6 tritt durch den Eintrittsspiegel 2 in den Resonator 1 ein und wird vom zweiten Spiegel 3 zum Eintrittsspiegel 2 zurück reflektiert. Der einfallende Strahl 6 und das vom Spiegel 3 zurückgeworfene Licht interferieren miteinander und bilden einen durch den zweiten Spiegel 3 hindurchdringenden Signalstrahl 7. Das Licht des Signalstrahls 7 setzt sich nach E. R. Cox et al. aus schmalen Ausschnitten des Spektrums des einfallenden Strahls 6 zusammen, deren zentrale Wellenlängen $W_Z$ unter anderem von der optischen Länge L abhängig ist. Der Resonator 1 wirkt als ein Kammfilter, dessen Durchlasskennlinie bei den vorbestimmten zentralen Wellenlängen $W_Z$ eine maximale Transparenz

aufweist, während die Transparenz zwischen den Maxima beinahe auf Null fällt. Aus darstellerischen Gründen ist der einfallende Strahl 6 leicht schräg zur optischen Achse 4 gezeichnet.

Der Resonator 1 kann, wie in der Einleitung erwähnt, als Signalgeber arbeiten, wobei sich seine optische Länge $L_S$ unter der Wirkung einer zu messenden physikalischen Grösse verändert. Die zentralen Wellenlängen $W_Z$ der Durchlasskennlinie des Signalgebers verschieben sich proportional zum Messwert der Messgrösse, d. h. Lichtfrequenzen des Signalstrahls 7 weisen einen Frequenzhub proportional zum Messwert auf. Die Messgrösse wird im Signalstrahl 7 zu einer Vorrichtung 8 zum Empfang wellenlängen-modulierter Lichtsignale übertragen, wobei vorzugsweise ein Lichtleiter 9 zum Führen des Signalstrahls 7 zwischen dem Spiegel 3 der Austrittsseite des Resonators 1 und einem Eintrittsfenster 10 der Vorrichtung 8 angeordnet ist.

Die Vorrichtung 8 gemäss der Figur 2 umfasst wenigstens einen Detektor 11 und eine Verstärkereinheit 12. Die Vorrichtung 8 enthält mit Vorteil eine Auswerteeinheit 13, die mit der Verstärkereinheit 12 verbunden ist und die ein Messignal aus mittels des Signalstrahls 7 zur Vorrichtung 8 übertragenen Informationen erzeugt. Das Messignal kann z. B. leitungsgebunden einem Anzeigegerät 14 oder als Steuersignal einer hier nicht gezeigten Einrichtung zugeführt werden.

Der Detektor 11 weist wenigstens einen Referenzsensor 15 und zwei Photosensoren 16 und 17 auf, die das empfangene Licht des Signalstrahls 7 in Photoströme mit den Intensitäten $I_0$, $I_1$ und $I_2$ umwandeln. Beispielsweise liegen die Sensoren 15 bis 17 in der gleichen Ebene, wobei der Referenzsensor 15 zwischen den beiden Photosensoren 16 und 17 angeordnet ist.

Vor einer lichtempfindlichen Zone des Photosensors 16 bzw. 17 ist im Signalstrahl 7 ein Filter 18 bzw. 19 angeordnet, damit die Photosensoren 16 und 17 unterscheidbares Filterlicht 20 und 21 empfangen. Die Filter 18 und 19 weisen den gleichen Aufbau wie der Fabry-Perot-Resonator 1 (Figur 1) mit vorbestimmten festen optischen Längen $L_1$ und $L_2$ auf und wirken als Kammfilter. Ihre Durchlasskennlinien unterscheiden sich in der von den festen optischen Längen $L_1$, $L_2$ bestimmten Lage der Maxima. Der Referenzsensor 15 empfängt beispielsweise direkt den ungefilterten Signalstrahl 7. Der Signalstrahl 7 beleuchtet vorzugsweise gleichmässig die beiden Filter 18, 19 und den Referenzsensor 15.

Die elektronische Verstärkereinheit 12 umfasst wenigstens drei einzelne Verstärker 22 bis 24 und zwei mit den Verstärkern 22 bis 24 verbundene Referenzteiler 25 und 26, die elektrische Ausgangssignale A1 und A2 erzeugen.

Ein Ausgang des Sensors 15 bzw. 16 bzw. 17 ist mittels einer Leitung 27 bzw. 28 bzw. 29 mit einem Eingang des Verstärkers 22 bzw. 23 bzw. 24 verbunden. Eine Ausgangsleitung 30 bzw. 31 verbindet einen Ausgang des Signalverstärkers 23 bzw. 24 mit einem ersten Eingang des Referenzteilers 25 bzw. 26, während ein Ausgang des Referenzverstärkers 22 mittels einer Referenzleitung 32 zu einem Referenzeingang bei den beiden Referenzteilern 25 und 26 geleitet ist. Die elektrischen Ausgangssignale A1, A2 sind über Signalleitungen auf Ausgänge 33 und 34 der Verstärkereinheit 12 geführt.

Die Photoströme werden in den Verstärkern 22 bis 24 vorbestimmt verstärkt. Der Referenzteiler 25 bzw. 26 setzt die Intensität $I_1$ bzw. $I_2$ ins Verhältnis zur Referenzintensität $I_0$ und gibt ein dem Quotienten $I_1/I_0$ bzw. $I_2/I_0$ proportionales Ausgangssignal A1 bzw. A2 am Ausgang 33 bzw. 34 ab. Die beiden Ausgangssignale A1 und A2 sind von der Intensität des auf den Signalgeber einfallenden Strahls 6 (Figur 1) sowie der absoluten Empfindlichkeit der Sensoren 15 bis 17 unabhängig. Die beiden Ausgangssignale A1, A2 enthalten zusammen die Information, die mit dem wellenlängen-modulierten Lichtsignal im Signalstrahl 7 übertragen wird, der durch das Eintrittsfenster 10 auf den Detektor 11 fällt.

Beispielsweise erzeugt die Lichtquelle Licht mit der mittleren Wellenlänge $W_0$, dessen Intensität über eine spektrale Breite $\delta W$ konstant ist, wobei die spektrale Breite $\delta W$ viel kleiner ist als die mittlere Wellenlänge $W_0$. Die Durchlasskennlinie S(W) des Signalgebers, die Durchlasskennlinie $F_0(W)$ zum Referenzsensor 15 und die Durchlasskennlinien $F_1(W)$ und $F_2(W)$ der Filter 18, 19 sind einfache Cosinusfunktionen

$$S(W) = B_S + A_S \cos(4\pi L_S/W) \qquad (1)$$

$$F_0(W) = B_0 + A_0 \cos(4\pi L_0/W) \qquad (2)$$

$$F_1(W) = B_1 + A_1 \cos(4\pi L_1/W) \qquad (3)$$

$$F_2(W) = B_2 + A_2 \cos(4\pi L_2/W), \qquad (4)$$

wobei A die Amplitude der Interferenzlinien, B eine Konstante und W die Wellenlänge bedeutet. Empfängt beispielsweise der Referenzsensor 15 den Signalstrahl 7 direkt und unverändert, ist die Durchlasskennlinie

3

$F_0$ zum Referenzsensor 15, da die optische Länge $L_0 = 0$ ist, durch $F_0(W) = 1$ charakterisiert.

Die Intensität $I_x$ des Photostromes des x-ten Sensors 15 bzw. 16 bzw. 17 ist durch das Integral über das ganze Spektrum

$$I_x = CG_x \int D(W)S(W)F_x(W) \; dW \qquad\qquad (5)$$

beschrieben. Eine Konstante C hängt von der Intensität des einfallenden Strahls 6, von der Empfindlichkeit der Sensoren und von den Verlusten durch die Streuung des Lichts ab. Der Faktor $G_x$ berücksichtigt die spezifischen Verluste beim Eintritt des Lichts in den x-ten Sensor 15 bzw. 16 bzw. 17. $D(W)$ fasst die spektralen Abhängigkeiten der in C und $G_x$ enthaltenen Grössen zusammen.

Mit den Gleichungen 1 bis 5 und mit $F_0(W) = 1$ werden die Intensitäten $I_0$, $I_1$ und $I_2$ der Photoströme zu:

$I_0 = CG_0\{B_S + A_SP(L_S)\}$,
$I_1 = CG_1\{B_1B_S + A_1B_SP(L_1) + B_1A_SP(L_S) + \frac{1}{2}A_1A_S[P(L_S\text{-}L_1) + P(L_S + L_1)]\}$,
$I_2 = CG_2\{B_2B_S + A_2B_SP(L_2) + B_2A_SP(L_S) + \frac{1}{2}A_2A_S[P(L_S\text{-}L_2) + P(L_S + L_2)]\}$,

wobei

$$P(x) = \int D(W)\cos(4\pi x/W)dW$$

$$\approx k[\sin(2\pi x/k)/2\pi x]\cos(4\pi x/W_0). \qquad\qquad (6)$$

Die Figur 3 zeigt die Funktion $P(x)$. Sie ist eine modulierte Cosinusfunktion mit einer Periodizität von $\frac{1}{2}W_0$. Die $P(x)$ umhüllende Modulationsfunktion $F(x)$ weist eine maximale Amplitude bei $x = 0$ und Nullstellen im Abstand von $\frac{1}{2}k$ auf, wobei $k = (W_0)^2/\delta W$ die Kohärenzlänge des Lichts im Strahl 6 (Figur 1) ist.

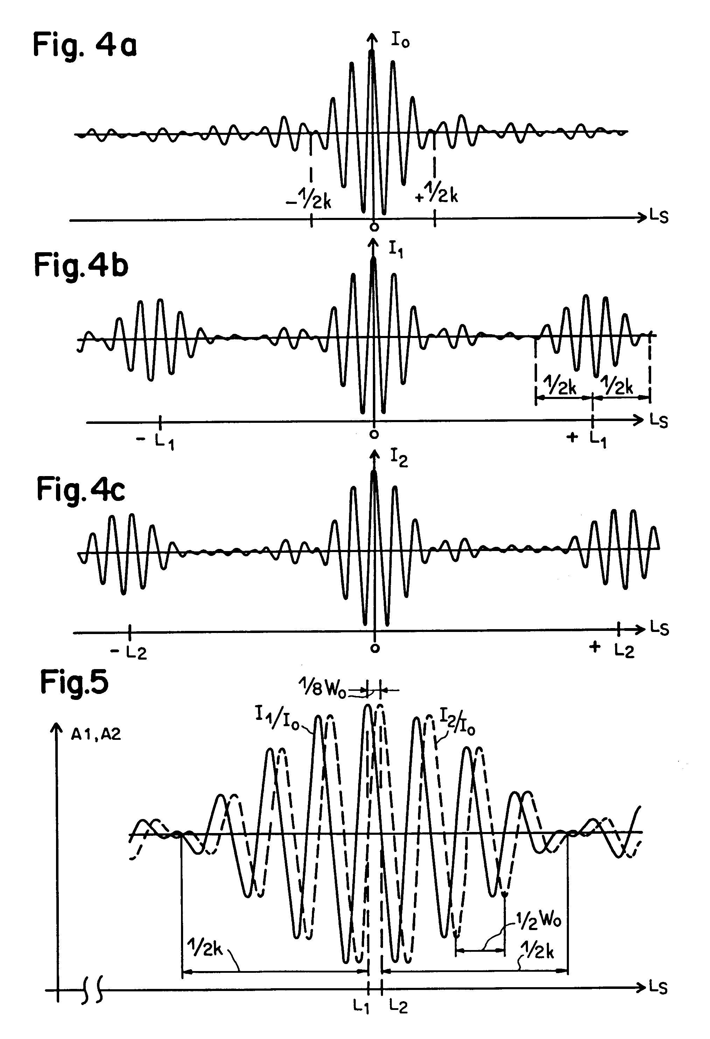

Die Intensitäten $I_0$, $I_1$ und $I_2$ sind als Funktionen der optischen Länge $L_S$ des Signalgebers in den Figuren 4a bis 4c dargestellt. Sie weisen die Periodizität von $\frac{1}{2}W_0$ (Figur 3) auf und setzen sich aus einem konstanten Beitrag und dem von der optischen Länge $L_S$ abhängigen Anteil zusammen. Die Referenzintensität $I_0$ (Figur 4a) verhält sich wie die Funktion $P(x)$. Die Intensität $I_1$ (Figur 4b) und die Intensität $I_2$ (Figur 4c) sind in einem Bereich von wenigstens k um $L_S = 0$ proportional zur Referenzintensität $I_0$ (Figur 4a) und weisen bei $L_S = \pm L_1$ (Figur 4b) und bei $L_S = \pm L_2$ (Figur 4c) auf einer Strecke k weitere Maxima auf, die von den Filtern 18 und 19 (Figur 2) bewirkt werden.

Die Figur 5 zeigt die in den Referenzteilern 25 und 26 (Figur 2) gebildeten Quotienten $I_1/I_0$ und $I_2/I_0$ als Funktionen von $L_S$ in der Umgebung von $L_1$ und $L_2$. Die Quotienten $I_1/I_0$ und $I_2/I_0$ sind von der Konstante C unabhängig und haben die Periodizität $\frac{1}{2}W_0$. Die Quotientenbildung unterdrückt den Anteil der Referenzintensität $I_0$ (Figur 4a) aus den Intensitäten $I_1$ (Figur 4b) und $I_2$ (Figur 4c) und hebt die um $\pm L_1$ und $\pm L_2$ zentrierten Maxima hervor. Da $L_1$ und $L_2$ verschiedene vorbestimmte Werte aufweisen, sind die beiden Funktionen der Quotienten $I_1/I_0$ und $I_2/I_0$ auf der Abszissenachse gegeneinander phasenverschoben. Mit der optischen Länge $L_S$ ändern sich vorbestimmt die beiden zu den Quotienten $I_1/I_0$ und $I_2/I_0$ proportionalen Ausgangssignale A1 und A2, die ein Wertepaar [A1; A2] bilden, das über eine Vielzahl von Perioden $\frac{1}{2}W_0$ eindeutig einer vorbestimmten optischen Länge $L_S$ entspricht, d. h. die Vorrichtung 8 (Figur 2) kann Lichtsignale mit einem grossen Modulationsgrad empfangen und demodulieren.

Die in der Figur 2 gezeigte Vorrichtung 8 weist die Vorteile auf, dass sie kostengünstig aus den zwei Photosensoren 16 und 17 mit den Filtern 18 und 19, dem Referenzsensor 15 sowie der Verstärkereinheit 12 aufgebaut ist, dass die Ausgangssignale A1, A2 von der Intensität des einfallenden Strahls 6 (Figur 1) sowie von der Empfindlichkeit der Sensoren 15 bis 17 unabhängig sind und dass der nutzbare Modulationsgrad des Signalstrahls 7 die Vielzahl der Perioden $\frac{1}{2}W_0$ umfasst.

Beispielsweise enthält die mit den Ausgängen 33, 34 verbundene Auswerteeinheit 13 einen Mikroprozessor 35 zum Verarbeiten der Ausgangssignale A1, A2 mit einem Speicher 36. Der Speicher 36 weist in einem dem Modulationsgrad entsprechenden vorbestimmten Bereich Werte der Modulation und zugeordnete Sollwertpaare der Ausgangssignale A1, A2 auf, wobei der Inhalt des Speichers 36 durch das Licht der Lichtquelle, den Signalgeber und den Detektor 11 vorbestimmt ist.

Der Mikroprozessor 35 vergleicht mit Vorteil das an die Ausgänge 33, 34 abgegebene Wertepaar [A1; A2] mit den Sollwertpaaren im Speicher 36 und bestimmt bei Uebereinstimmung des Wertepaars [A1; A2] mit einem der Sollwertpaare auf einfachste Weise den zugeordneten, der Modulation entsprechenden Wert. Die Auswerteeinheit 13 erzeugt aus diesem Wert ein der Modulation proportionales Messignal und leitet es an das Anzeigegerät 14 weiter. Anstelle einer Messwertanzeige zum visuellen Anzeigen kann das Anzeigegerät 14 als Lautsprecher ausgebildet sein, wenn der Signalgeber z. B. feine Schwankungen des Luftdrucks aufnimmt und als Mikrophon arbeitet.

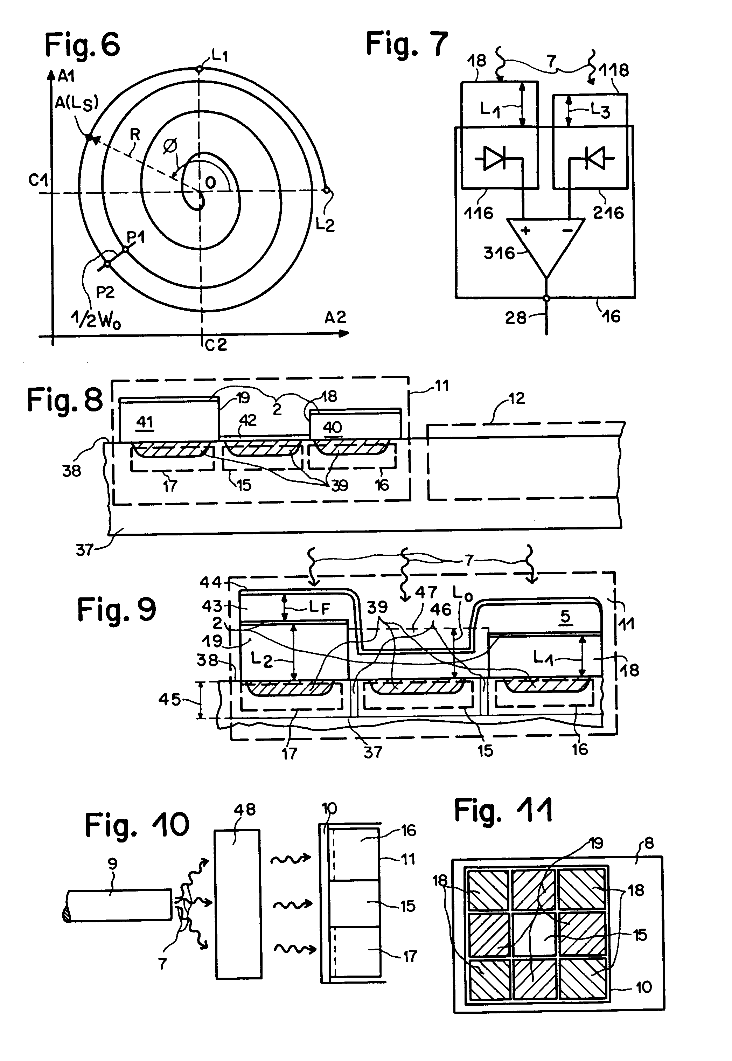

In einer in der Figur 6 dargestellten Ebene der Ausgangssignale A1, A2 legen die vorbestimmten Sollwertpaare eine spiralförmige Ortsfunktion $A(L_S)$ der optischen Länge $L_S$ fest. Ein gezeichneter Teil der Ortsfunktion $A(L_S)$ windet sich, von einem Nullpunkt mit dem Wert $L_S = L_1 - \frac{1}{2}k$ und mit dem Wertepaar [C1; C2] ausgehend, mit einem zunehmenden Radius R um den Nullpunkt, um nach der halben Kohärenzlänge k in der Ordinate beim Wert $L_S = L_1$ und anschliessend beim Wert $L_S = L_2$ auf der Abszisse einen maximalen Abstand vom Nullpunkt zu erreichen. Für Werte von $L_S$ grösser als $L_2$ spiralt ein hier nicht gezeigter Teil der Ortsfunktion $A(L_S)$ den gezeichneten Teil der Ortsfunktion $A(L_S)$ mehrfach schneidend wieder zum Nullpunkt zurück, während sich der Parameter $L_S$ um die halbe Kohärenzlänge k (Figur 4) auf $L_S = L_2 + \frac{1}{2}k$ vergrössert.

Die Auswerteeinheit 13 (Figur 2) kann auch aus dem Wertepaar [A1; A2] zunächst die Polarkoordinaten, den Radius R und einen Phasenwinkel $\phi = \arctan(A1/A2)$, für einen durch den Signalgeber vorbestimmten Punkt der Ortsfunktion $A(L_S)$ bilden und sie mit den entsprechenden Sollwerten des Speichers 26 vergleichen.

Ist die optische Länge $L_S$ immer grösser als die optische Länge $L_1$ oder immer kleiner als die optische Länge $L_2$, ist für jedes Wertepaar [A1; A2] der absolute Wert der Modulation bzw. der optischen Länge $L_S$ im Bereich der halben Kohärenzlänge k eindeutig bestimmbar.

Beträgt die Differenz der optischen Längen $L_1$, $L_2$ ein Achtel der mittleren Wellenlänge $W_0$, sind die Quotienten $I_1/I_0$ und $I_2/I_0$ (Figur 5) um $\pi/2$ phasenverschoben. Punkte P1, P2 der Ortsfunktion $A(L_S)$ im Abstand der Periode $\frac{1}{2}W_0$ liegen auf benachbarten Kurvenstücken der Ortsfunktion $A(L_S)$ und weisen den grösstmöglichen Abstand auf. Dadurch werden die messtechnischen Anforderungen an die Ausgangssignale A1 und A2 und deren Auswertung vorteilhaft reduziert.

Die Auswerteeinheit 13 ist vorzugsweise auch zum Erkennen der Aenderung der optischen Länge $L_S$ zusätzlich eingerichtet, da sich der eindeutig erkennbare Bereich der Modulation von $L_1 - \frac{1}{2}k$ bis $L_2 + \frac{1}{2}k$ (Figur 5) verdoppelt.

Das Wertepaar [C1; C2] ist unter anderem von der Qualität des Signalgebers abhängig. Die Anordnung der Photosensoren 16 und 17 (Figur 2) nach der Figur 7 beseitigt vorteilhaft diese Abhängigkeit. Für den Photosensor 16 umfasst die Anordnung zwei Photodioden 116 und 216 mit den vorgeschalteten Filtern 18 und 118 sowie einen Differenzverstärker 316, dessen Ausgang in die Leitung 28 mündet. Die Photodiode 116 mit dem Filter 18 speist ihren Photostrom in den [+]-Eingang des Differenzverstärkers 316 ein. Das Filter 118 weist die optische Länge $L_3$ auf und filtert den Signalstrahl 7 für die Photodiode 216, die ihren Photostrom in den [-]-Eingang des Differenzverstärkers 316 einspeist. Beträgt die Differenz der optischen Längen $(L_1 - L_3)$ genau $W_0/4$, ist der Wert C1 = 0 (Figur 6). Der Photosensor 17 in der der Figur 7 entsprechenden Ausführung besitzt ein hier nicht gezeigtes zusätzliches Filter mit der optischen Länge $L_4$, die um $W_0/4$ von der optischen Länge $L_2$ des Filters 19 (Figur 2) verschieden ist, so dass auch der Wert C2 = 0 (Figur 6) ist. Für bestimmte Anwendungen kann einer der Photosensoren 16, 17 nach der Figur 7 und der andere nach der Figur 2 ausgeführt sein.

In der Figur 8 ist die Vorrichtung 8 (Figur 2) auf der Oberfläche eines Substrates 37 aus einem Halbleitermaterial angeordnet, da alle elektronischen und optischen Komponenten des Detektors 11 vorteilhaft mittels der gleichen IC-Technik erzeugbar sind. Weitere Vorteile sind die geringen Abmessungen des Detektors 11 und die mit einem geringen Aufwand erreichbare grosse Genauigkeit, die für optische Komponenten notwendig ist.

Beispielsweise ist das Substrat 37 ein p-leitender Silizium-Wafer, in dessen eine Oberfläche 38, z. B. mittels Diffusion, n-leitende Inseln 39 erzeugt sind, die zusammen mit dem Substrat 37 die lichtempfindlichen P-N-Uebergänge der Sensoren 15 bis 17 bilden. Aus darstellerischen Gründen sind notwendige elektrische Verbindungen nicht gezeichnet.

Mit Vorteil weist der gleiche Wafer neben dem Detektor 11 auch die elektronischen Komponenten der Verstärkereinheit 12 auf, da die Leitungen 27 bis 29 (Figur 2) äusserst kurz ausführbar sind und daher die auf ihnen fliessenden Photoströme kaum von äusseren Störungen beeinflussbar sind. Auch die Auswerteeinheit 13 (Figur 2) kann auf dem Substrat 37 erzeugt werden.

Die Filter 18, 19 sind auf der Oberfläche 38 über den lichtempfindlichen Zonen der Sensoren 15 bis 17 angeordnet. Das Filter 18 bzw. 19 weist eine planparallele Schicht 40 bzw. 41 aus z. B. Siliziumdioxid ($SiO_2$) als Medium 5 (Figur 1) auf. Die $SiO_2$-Schichten 40, 41 sind z. B. aus der Dampfphase durch Masken auf der Oberfläche 38 abscheidbar. Die der Oberfläche 38 abgewandte Fläche der $SiO_2$-Schichten 40, 41 ist mit einer dünnen aufgedampften Metallschicht als Eintrittsspiegel 2 ausgerüstet. Eine Grenzfläche zwischen der $SiO_2$-Schicht 40 bzw. 41 und dem Substrat 37 bildet den zweiten Spiegel 3 (Figur 1).

Über dem Referenzsensor 15 kann die Oberfläche 38 oxidiert sein, damit eine dünne Schutzschicht 42 aus $SiO_2$ entsteht.

In der Figur 9 weist der Detektor 11 auf der dem Signalstrahl 7 zugewandten Seite ein Spektralfilter 43 nach Fabry-Perot mit einer vorbestimmten optischen Länge $L_F$ auf. Das Spektrum des Signalstrahls 7 für die Sensoren 15 bis 17 ist mittels des Spektralfilters 43 begrenzt, wobei die Kohärenzlänge k der Lichtquelle (Glühlampe, Leuchtdiode) vorteilhaft unabhängig von ihrer Betriebsbedingung vorbestimmt ist.

Direkt über dem Referenzsensor 15 und über dem Einfallsspiegel 2 der Filter 18, 19 erstreckt sich das Medium 5 aus $SiO_2$ in der vorbestimmten Dicke. Der Resonator 1 (Figur 1) des Spektralfilters 43 ist mit einem einige Nanometer dicken Metallspiegel 44 auf der dem Signalstrahl 7 zugewandten Seite abgeschlossen. Das Spektralfilter 43 ist vorzugsweise in der gleichen Technik wie die Filter 18,19 auf dem Substrat 37 aufgebaut, da auf dem Detektor 11 mit geringen Kosten zwei zusätzlichen Schichten 5, 44 erzeugt werden. Die Schutzschicht 42 (Figur 7) kann weggelassen werden.

Selbstverständlich kann das Spektralfilter 43 auch im einfallenden Strahl 6 (Figur 1) oder an einem anderen Ort im Signalstrahl 7 angeordnet sein. Beispielsweise kann das Spektralfilter 43 in der gleichen Technik wie die Filter 18, 19 auf dem Spiegel 2 oder 3 (Figur 1) des Signalgebers aufgebaut sein.

Bei der schmalbandigen Leuchtdiode weisen die optischen Längen $L_1$, $L_2$ zweckmässigerweise Werte auf, die die mittlere Wellenlänge $W_0$ einschliessen. Die Ausdehnung des Spektralfilters 43 ist auf ein hier gestrichelt gezeichnetes Referenzfilter 47 vor dem Referenzsensor 15 beschränkt, wobei die optische Länge $L_0$ des Referenzfilters 47 das aus $L_1$ und $L_2$ gebildete Mittel ist, damit der nutzbare Modulationsgrad vorteilhaft möglichst gross ist.

In einem Beispiel weisen die optischen Längen $L_1$, $L_2$, $L_F$ der Filter 18, 19, 43 einen vorbestimmten Wert zwischen 0,1 $\mu$m bis 5 $\mu$m auf, während die Metallschicht für die Eintrittsspiegel 2 und für den Metallspiegel 44 sowie die Schutzschicht 42 (Figur 8) einige Nanometer dick sind.

Die Oberfläche 38 des p-Substrats 37 kann auch als n-leitende Epitaxie-Schicht 45 ausgebildet sein, in die die p-leitenden Inseln 39 eindiffundiert sind. Sie sind mittels einer n-leitenden Schicht vom p-Substrat 37 getrennt und bilden die lichtempfindlichen P-N-Uebergänge der Sensoren 15 bis 17. Die lichtempfindliche Zone der Sensoren 15 bis 17 sind von p-leitenden Leisten ("p-wells") 46 umschlossen, die von der Oberfläche 38 bis auf das Substrat 37 hinabreichen und dieses kontaktieren. Die Inseln 39 sind von den Leisten 46 durch n-leitendes Material getrennt.

Der in der Figur 10 aus dem Lichtleiter 9 austretende Signalstrahl 7 fächert sich stark auf. Mit Vorteil ist im Signalstrahl 7 zwischen dem Lichtleiter 9 und dem Eintrittsfenster 10 ein optisches Mittel 48 als Strahlteiler angeordnet, um den Signalstrahl 7 stabil und vorbestimmt auf die Sensoren 15 bis 17 aufzuteilen. Das optische Mittel 48 kann im einfachsten Fall ein im Signalstrahl 7 befindlicher transparenter, diffus streuender Körper sein. Eine passend vor dem Eintrittsfenster 10 angeordnete, den Signalstrahl 7 diffus auf den Detektor 11 streuende Fläche ist auch als Mittel 48 verwendbar.

In der Figur 11 ist eine Vielzahl der Photosensoren 16 (Figur 2) mit dem Filter 18 und der Photosensoren 17 (Figur 2) mit dem Filter 19 paarweise ringförmig um den einzigen Referenzsensor 15 angeordnet. Beispielsweise wechseln sich die Filter 18 und 19 ab, die in der Zeichnung mit Schraffuren verdeutlicht sind. Positionierfehler des Lichtleiters 9 (Figur 10) im Eintrittsfenster 10 gegenüber dem Detektor 11 (Figur 10) wirken sich vorteilhaft gering auf die Ausgangssignale A1 und A2 aus. Beispielsweise sind alle Photosensoren 16 bzw. 17 mit der Leitung 28 bzw. 29 (Figur 2) verbunden und gemeinsam auf den Verstärker 23 bzw. 24 (Figur 2) geführt. Im Eintrittsfenster 10 können auch eine Vielzahl von Sensoren 15 bis 17 in einem vorbestimmten Muster angeordnet sein, vorzugsweise bei der Verwendung eines Faserbündels als Lichtleiter 9.

Der in der IC-Technik auf einem Substrat 37 (Figur 8) erzeugte Detektor 11 weist beispielsweise Flächen der Filter 18 und 19 mit je 30 $\mu$m Seitenlänge auf. Das Eintrittsfenster 10 mit etwa 100 $\mu$m Seitenlänge ist den Abmessungen der typisch verwendbaren Lichtleiter 9 (Figur 10) angepasst.

**Patentansprüche**

1. Vorrichtung zum Empfang von wellenlängen-modulierten Lichtsignalen in einem Signalstrahl (7), mit Photosensoren (16; 17) und mit diesen vorgeschalteten Filtern (18; 19), die aus dem Signalstrahl (7) Filterlicht (20; 21) zum Beleuchten der Photosensoren (16; 17) erzeugen, dadurch gekennzeichnet, dass ein Detektor (11) wenigstens zwei Photosensoren (16; 17) mit den zugeordneten Filtern (18; 19) und einen Referenzsensor (15) zum Empfang des Signalstrahls (7) umfasst, dass die Filter (18; 19) als Fabry-Perot-Resonatoren (1) mit verschiedenen, vorbestimmten optischen Längen ($L_1$; $L_2$) ausgebildet sind und dass eine an den Sensoren (15 bis 17) angeschlossene Verstärkereinheit (12) für jeden Photosensor (18 bzw. 19) einen Referenzteiler (25 bzw. 26) aufweist, der zur Bildung von Ausgangssignalen (A1; A2) die Intensität ($I_1$ bzw. $I_2$) des Photostroms aus dem Photosensor (16 bzw. 17) ins Verhältnis zu einer Referenzintensität ($I_0$) des Photostroms aus dem Referenzsensor (15) setzt.

2. Vorrichtung nach Anspruch 1, dadurch gekennzeichnet, dass ein Auswertegerät (13) mit den beiden Ausgängen (33; 34) der Referenzteiler (25; 26) verbunden ist und dass das Auswertegerät (13) zum Erzeugen eines Messignals aus den Ausgangssignalen (A1; A2) der Referenzteiler (25; 26) eingerichtet ist, wobei das Messignal einer mittels des wellenlängen-modulierten Lichtsignals im Signalstrahl (7) übertragenen Information entspricht.

3. Vorrichtung nach Anspruch 2, dadurch gekennzeichnet, dass das Auswertegerät (13) einen Mikroprozessor (35) mit einem Speicher (36) enthält, der für einen vorbestimmten Bereich Werte der Modulation und zugeordnete Sollwertpaare aufweist, dass das Auswertegerät (13) zum Vergleichen eines Wertepaars der Ausgangssignale (A1; A2) mit den Sollwertpaaren eingerichtet ist und dass bei einer Uebereinstimmung ein Ablesen eines der Modulation entsprechenden Werts aus dem Speicher (36) zum Erzeugen eines Messignals erfolgt.

4. Vorrichtung nach einem der Ansprüche 1 bis 3, dadurch gekennzeichnet, dass vor dem Detektor (11) im Signalstrahl (7) ein optisches Mittel (48) als Strahlteiler angeordnet ist.

5. Vorrichtung nach einem der Ansprüche 1 bis 4, dadurch gekennzeichnet, dass vor dem Detektor (11) ein Spektralfilter (43) zum Ausschneiden eines vorbestimmten Spektralfensters im Signalstrahl (7) angeordnet ist.

6. Vorrichtung nach einem der Ansprüche 1 bis 4, dadurch gekennzeichnet, dass vor dem Referenzsensor (15) ein Referenzfilter (47) zum Ausschneiden eines vorbestimmten Spektralfensters im Signalstrahl (7) angeordnet ist und dass die optische Länge ($L_0$) des Referenzfilters (47) einen Wert zwischen den Werten der optischen Längen ($L_1$; $L_2$) der Filter (18; 19) aufweist.

7. Vorrichtung nach einem der Ansprüche 1 bis 6, dadurch gekennzeichnet, dass die Sensoren (15 bis 17) und die Filter (18; 19 bzw. 18; 19; 43 bzw. 47) auf einem Substrat (37) erzeugt sind.

8. Vorrichtung nach Anspruch 7, dadurch gekennzeichnet, dass das Substrat (37) zusätzlich elektronische Elemente der Verstärkereinheit (12) aufweist.

9. Vorrichtung nach einem der Ansprüche 1 bis 8, dadurch gekennzeichnet, dass der Photosensor (16 bzw. 17) zwei Photodioden (116; 216) mit den mittels der optischen Längen ($L_1$; $L_2$ bzw. $L_3$; $L_4$) unterscheidbaren Filtern (18; 118 bzw. 19) und einen Differenzverstärker (316) umfasst und dass die optischen Längen ($L_1$; $L_2$ bzw. $L_3$; $L_4$) eine Differenz von einem Viertel der mittleren Wellenlänge ($W_0$) aufweisen.

# Fig.1

# Fig.2

# Fig.3

**Fig. 4a**

$I_0$

$-\frac{1}{2}k$   $+\frac{1}{2}k$

$L_S$

**Fig.4b**

$I_1$

$\frac{1}{2}k$   $\frac{1}{2}k$

$-L_1$   $+L_1$   $L_S$

**Fig.4c**

$I_2$

$-L_2$   $+L_2$   $L_S$

**Fig.5**

$\frac{1}{8}W_0$

$I_1/I_0$   $I_2/I_0$

$A1, A2$

$\frac{1}{2}W_0$

$\frac{1}{2}k$   $\frac{1}{2}k$

$L_1$   $L_2$   $L_S$

# Fig. 6

A(L_S)

A1

C1

$1/2W_0$

C2

A2

L1

R

Ø

O

P1

P2

L2

# Fig. 7

18     7     118

$L_1$     $L_3$

116     216

316

28     16

# Fig. 8

19   2   18   11     12

41    42    40

38

17    15    39    16

37

# Fig. 9

7

44

43

2

19

38

45

$L_F$   39   47   46   $L_0$

$L_2$       $L_1$

5

11

18

17    37    15    16

# Fig. 10

48    10

9     16

11

15

7     17

# Fig. 11

19   8

18     18

15

10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 337 796  (NTT) <br> * Seite 2, Zeile 20 - Zeile 25 * * * Seite 4, Zeile 36 - Zeile 52; Abbildung 1 * * <br> – – – | 1,4,5,9 | H 04 B 10/14 <br> G 02 B 6/42 |
| A | IBM TECHNICAL DISCLOSURE BULLETIN. Bd. 31, Nr. 11, April 1989, NEW YORK US Seiten 271 - 274; 'Method of setting tunable optical filters in a wavelength division multi-access system' <br> * Seite 271, Absatz 1 - Seite 272, letzter Absatz; Abbildungen 1,2 * * <br> – – – | 1,3-5 | |
| A | SOLID STATE ELECTRONICS. Bd. 27, Nr. 10, Oktober 1984, OXFORD GB Seiten 917 - 919; S.C.LEE ET AL: 'An AlGaAs-GaAs dual-wavelength photodetector with 500 A resolution' <br> * Einführung * * * Abbildungen 1,5 * * <br> – – – | 1,2,7 | |
| A | OPTICS LETTERS. Bd. 13, Nr. 8, August 1988, NEW YORK US Seiten 684 - 686; A.FRENKEL ET AL: 'Multiple angle-tuned etalon filters for optical channel selection in wavelength-division multiplexed and optical frequency-division multiplexed direct-detection transmission systems' <br> * Seite 684, linke Spalte, Absatz 1; Abbildungen EP 911056340301-3 * * <br> – – – – – | 1,4,5,9 | **RECHERCHIERTE SACHGEBIETE (Int. Cl.5)** <br><br> H 04 B <br> G 02 B <br> G 01 J |

Der vorliegende Recherchenbericht wurde für alle Patentansprüche erstellt

| Recherchenort | Abschlußdatum der Recherche | Prüfer |
|---|---|---|
| Den Haag | 16 Dezember 91 | GOUDELIS M. |